# EUROPEAN PATENT APPLICATION

(11) **EP 4 775 176 A1**
(43) Date of publication of application: **15.07.2026**
(21) Application number: 24898940.2
(22) Date of filing: 19.11.2024
(51) Int. Cl.: A61C 17/34, A61C 17/22

(54) **ORAL CARE DEVICE, CONTROL METHOD, ELECTRONIC DEVICE, AND STORAGE MEDIUM**

(30) Priority: 19.09.2024 CN 202411311196
(71) Applicant: Shenzhen Soocas Technology Co., Ltd., Shenzhen, Guangdong 518000 (CN)
(72) Inventor: YU, Hang, Shenzhen, Guangdong 518000 (CN); YIN, Zhikun, Shenzhen, Guangdong 518000 (CN); MIAO, Derun, Shenzhen, Guangdong 518000 (CN); MENG, Fandi, Shenzhen, Guangdong 518000 (CN)
(74) Representative: Herrero & Asociados, S.L.
(86) International application number: PCT/CN2024/133065
(87) International publication number: WO 2026/060807

(57) **Abstract**

Embodiments of the present application relate to the field of oral nursing technologies, and disclose an oral nursing device, a control method, an electronic device, and a storage medium, which can effectively improve a tooth cleaning effect. In the embodiments of the present application, a control assembly can drive an output shaft of an actuation assembly to output plural cleaning motions by outputting a driving signal, so as to drive a cleaning unit to perform a corresponding motion. Therefore, when the output shaft outputs the plurality of cleaning motions, the cleaning unit generates vibrations to clean teeth. Meanwhile, since first angles of some cleaning motions are larger than first angles of adjacent cleaning motions and second angles are smaller than second angles of the adjacent cleaning motions, center positions of swing angles of these cleaning motions differ from center positions of swing angles of the adjacent cleaning motions. When the output shaft outputs the plurality of cleaning motions, the cleaning unit generates a sweeping effect to improve the tooth cleaning effect.

## Description

The present application claims priority to Chinese Patent Application No. 202411311196.6, entitled "Oral Nursing Device, Control Method, Electronic Device, and Storage Medium", filed with China National Intellectual Property Administration on September 19, 2024, the entire content of which is incorporated herein by reference.

### TECHNICAL FIELD

The present application relates to the field of oral nursing technologies, and in particular, to an oral nursing device, a control method, an electronic device, and a storage medium.

### BACKGROUND

An electric toothbrush has the working principle that a brush head is driven to generate high-frequency vibrations by a motor, so as to enable bristles to vibrate at a high frequency on surfaces of teeth, such that toothpaste is decomposed into fine foam to deeply clean slits between the teeth, thereby realizing cleaning of the teeth.

In the related art, a control assembly in the electric toothbrush drives the motor with a fixed driving signal. Since the brush head of the electric toothbrush can only vibrate at the high frequency, the electric toothbrush has the technical problem of a poor tooth cleaning effect.

For the above problem, no effective solution is proposed at present.

### SUMMARY

In view of this, embodiments of the present application provide an oral nursing device, a control method, an electronic device, and a storage medium, which can effectively improve a tooth cleaning effect.

In a first aspect, embodiments of the present application provide an oral nursing device, including: a cleaning portion at least provided with a cleaning unit; a grip portion connected with the cleaning portion; an actuation assembly at least partially accommodated in the grip portion, the actuation assembly including an output shaft engaged with the cleaning portion; and a control assembly generating a driving signal to drive the output shaft of the actuation assembly to output a periodic cleaning motion and thus drive the cleaning unit, wherein the periodic cleaning motion includes a plurality of cleaning motions, each of the plural cleaning motions includes a first motion and a second motion, and as the first motion, the output shaft rotates by a first angle along a first direction and then rotates back to an initial position with a first axis as a rotation center line, and as the second motion, the output shaft rotates by a second angle along a second direction and then rotates back to the initial position with the first axis as the rotation center line; the first direction and the second direction are opposite; the first angle of at least one cleaning motion is greater than that of an adjacent cleaning motion, and the second angle of the at least one cleaning motion is smaller than that of the adjacent cleaning motion.

In a second aspect, embodiments of the present application provide an oral nursing device control method applied to an oral nursing device, the oral nursing device including: a cleaning portion at least provided with a cleaning unit; a grip portion connected with the cleaning portion; an actuation assembly at least partially accommodated in the grip portion, the actuation assembly including an output shaft engaged with the cleaning portion; and a control assembly;

the method including: generating, by the control assembly, a driving signal to drive the output shaft of the actuation assembly to output a periodic cleaning motion and thus drive the cleaning unit, wherein the periodic cleaning motion includes a plurality of cleaning motions, and each of the plural cleaning motions includes a first motion and a second motion; the driving signal is a pulse width modulation signal; the control assembly generates a pulse width modulation signal with a first duty cycle to allow the output shaft to correspondingly output the first motion, the control assembly generates a pulse width modulation signal with a second duty cycle to allow the output shaft to correspondingly output the second motion, and the pulse width modulation signal with the first duty cycle and the pulse width modulation signal with the second duty cycle have different current input directions; the first duty cycle of at least one cleaning motion is greater than that of an adjacent cleaning motion, and the second duty cycle of the at least one cleaning motion is smaller than that of the adjacent cleaning motion.

In a third aspect, embodiments of the present application further provide an electronic device, including a processor and a memory storing program instructions, the processor being configured to, when executing the program instructions, perform the control method of an oral nursing device according to any one of the embodiments of the present application.

In a fourth aspect, embodiments of the present application further provide a storage medium storing program instructions, the program instructions, when executed, performing the control method of an oral nursing device according to any one of the embodiments of the present application.

In oral nursing device according to the embodiment of the present application, the control assembly can drive the output shaft of the actuation assembly to output the plurality of cleaning motions by outputting the driving signal, so as to drive the cleaning unit to perform the corresponding motions. Therefore, when the output shaft outputs the plurality of cleaning motions, the cleaning unit generates vibrations to clean teeth. Meanwhile, since the first angles of at least some of the cleaning motions are larger than the first angles of the adjacent cleaning motions and the second angles are smaller than the second angles of the adjacent cleaning motions, center positions of swing angles of these cleaning motions differ from center positions of swing angles of the adjacent cleaning motions. When the output shaft outputs the plurality of cleaning motions, the cleaning unit produces a sweeping effect, such that the action that a human hand swings a brush head to clean the teeth can be imitated to perform reciprocating sweeping and vibration cleaning on the same tooth region, so as to clean the oral cavity more thoroughly and deeply, thus improving the tooth cleaning effect.

### BRIEF DESCRIPTION OF THE DRAWINGS

To describe the technical solutions of the embodiments of the present application or the prior art more clearly, the following briefly describes the accompanying drawings required for describing the embodiments or the prior art. Apparently, the accompanying drawings in the following description only show some embodiments of the present application, and a person of ordinary skill in the art may still derive other drawings from these accompanying drawings without creative efforts.
FIG. 1 is a schematic structural diagram of an oral nursing device according to an embodiment of the present application;
FIG. 2 is a sweeping frequency-swing amplitude curve of the oral nursing device according to the embodiment of the present application;
FIG. 3 is a schematic flow diagram of a control method of an oral nursing device according to an embodiment of the present application; and
FIG. 4 is a schematic structural diagram of an electronic device according to an embodiment of the present application.

### DETAILED DESCRIPTION

For convenience of description, some nouns or terms involved in the embodiments of the present application are explained below:

Duty Cycle: a ratio of the time when a signal is in a high level state in one cycle to the total cycle. In motor control, the duty cycle may be used to control a working mode and power output of a motor. The motor control is realized by using a pulse width modulation (PWM) technology. Pulse width modulation is referred to as PWM for short. In the PWM technology, an output voltage is controlled by varying the duty cycle of a pulse, thereby controlling a working state of the motor. In general, the larger the duty cycle is, the larger the power output by the motor is, and a rotation angle of an output shaft of the motor is correspondingly increased; conversely, the smaller the duty cycle is, the smaller the power output by the motor is, and the rotation angle of the output shaft of the motor is correspondingly reduced.

In the related art, in an electric toothbrush, a brush head generates high-frequency vibrations to decompose toothpaste into fine foam, so as to deeply clean slits between teeth, thereby realizing cleaning of the teeth. However, the method has a small cleaning area, and thus has a poor tooth cleaning effect.

In view of this, the embodiments of the present application provide an oral nursing device, a control method, an electronic device, and a storage medium; during an operation process of the oral nursing device, the brush head sweeps while vibrating, so as to clean the oral cavity more thoroughly and deeply, thus improving the tooth cleaning effect.

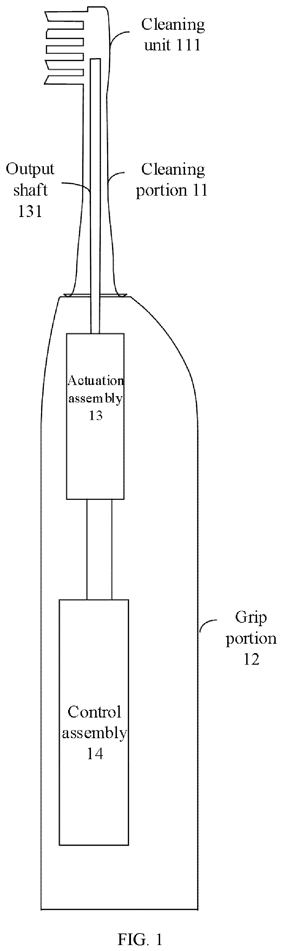

The embodiments of the present application provide an oral nursing device for cleaning the teeth. Specifically, as shown in FIG. 1, the oral nursing device may be an electric toothbrush and include a cleaning portion 11, a grip portion 12, an actuation assembly 13, and a control assembly 14.

The cleaning portion 11 is detachably or fixedly connected with the grip portion 12. When the oral nursing device is used, a user holds the grip portion 12, puts the cleaning portion 11 connected with the grip portion 12 into the oral cavity, and cleans or nurses the oral cavity or teeth with the cleaning portion 11.

The control assembly 14 and the actuation assembly 13 may be arranged inside the grip portion 12. The actuation assembly 13 may include an output shaft 131, and the output shaft 131 may be connected with the cleaning portion 11. The cleaning portion 11 may include a cleaning unit 111, and the cleaning unit 111 may be specifically a toothbrush head. Specifically, the output shaft 131 may be connected with the cleaning unit 111.

The control assembly 14 may be electrically connected with the actuation assembly 13, and the control assembly 14 may output a driving signal to the actuation assembly 13 through a connection wire therebetween. Specifically, the actuation assembly 13 may include a driving chip. The driving chip can receive the driving signal output by the control assembly 14, and drive the output shaft of the actuation assembly 13 to output a periodic cleaning motion after performing power amplification on the driving signal. The periodic cleaning motion may include a plurality of cleaning motions. Thus, the cleaning unit 111 can be driven by the output shaft to move to achieve the tooth cleaning effect.

It should be noted that, as shown in FIG. 1, the positional relationship between the control assembly 14 and the actuation assembly 13 inside the grip portion 12 is only exemplary, and the positional relationship between components inside the grip portion 12 can be adjusted, which is not limited in the embodiment of the present application.

Specifically, the control assembly 14 is configured to control operation of the whole oral nursing device, and may be a microcontroller unit (MCU), or a central process unit (CPU) of the oral nursing device. The actuation assembly 13 may be a motor, such as a sonic motor, or the like, and the output shaft 131 is a motor shaft of the motor.

An implementation of output of the periodic cleaning motion by the output shaft 131 of the actuation assembly 13 is described below.

First, the output shaft 131 rotates by a first angle in a first direction and then rotates back to an initial position with a first axis as a rotation center line, and the motion is a first motion. Then, the output shaft 131 rotates by a second rotation angle in a second direction and then rotates back to the initial position with the first axis as the rotation center line, and the motion is a second motion. The first direction and the second direction are opposite directions. Specifically, the first axis may be a center line of the output shaft 131.

In an example, the first direction is clockwise and the second direction is counterclockwise. In another example, the first direction is counterclockwise and the second direction is clockwise.

The output shaft 131 continuously or discontinuously/intermittently outputs the plurality of cleaning motions to drive the cleaning unit 111 to correspondingly generate vibrations, thereby forming the periodic cleaning motion to achieve the tooth cleaning effect.

Meanwhile, in the aforementioned plurality of cleaning motions, the first angles of one or more cleaning motions may be larger than the first angles of adjacent cleaning motions, and the second angles may be smaller than the second angles of the adjacent cleaning motions. An amplitude of the cleaning motion is a sum of the aforementioned first angle and second angle. A center position of the amplitude of the aforementioned cleaning motion is different from a center position of the amplitude of the adjacent cleaning motion.

If the first angle is equal to the second angle of the cleaning motion, a center position of a swing angle of the cleaning motion is the initial position. If the first angle is larger than the second angle of the cleaning motion, the center position of the swing angle of the cleaning motion is located on a side of the initial position towards the first direction. If the first angle is smaller than the second angle of the cleaning motion, the center position of the swing angle of the cleaning motion is located on a side of the initial position towards the second direction.

Exemplarily, if the first direction is clockwise, the second direction is counterclockwise, the first angle of the cleaning motion A is 3 degrees, and the second angle of the cleaning motion A is 1 degree, the swing angle of the cleaning motion A is 4 degrees, and the center position of the swing angle of the cleaning motion A is a position obtained by rotating by 1 degree clockwise from the initial position. If the first angle of the cleaning motion B is 1 degree, and the second angle of the cleaning motion B is 3 degrees, the swing angle of the cleaning motion B is 4 degrees, and the center position of the swing angle of the cleaning motion B is a position obtained by rotating by 1 degree counterclockwise from the initial position.

When the output shaft 131 of the actuation assembly 13 is driven by the driving signal generated by the control assembly 14 to output the plurality of cleaning motions, since the center positions of the swing angles of at least some of the cleaning motions are different from the center positions of the adjacent cleaning motions, the cleaning unit 111 can generate a sweeping effect, and the action that a human hand swings the cleaning unit 111 with the first axis as a rotation center can be imitated, thus expanding a tooth cleaning range to clean the teeth more thoroughly and deeply, and improving the tooth cleaning effect.

For example, in an output sequence, in a first cleaning motion output by the output shaft 131 of the actuation assembly 13 driven by the driving signal generated by the control assembly 14, the first angle and the second angle are the same; the first angle in an output second cleaning motion is larger than that of the first cleaning motion, and the second angle in the second cleaning motion is smaller than that of the first cleaning motion, thus achieving the sweeping effect and a vibration effect; the first angle in an output third cleaning motion may be larger than that of the second cleaning motion and the second angle in the third cleaning motion is smaller than that of the second cleaning motion; certainly, as an implementation, the first angle in the third cleaning motion may be equal to that of the second cleaning motion, the second angle in the third cleaning motion may be equal to that of the second cleaning motion, and there may be many other implementations, which are not listed here one by one.

In the embodiment of the present application, the cleaning unit 111 can generate the sweeping effect in addition to the vibration to clean the teeth more thoroughly and deeply, thereby improving the tooth cleaning effect.

In the embodiment of the present application, the control assembly 14 can drive the output shaft 131 of the actuation assembly 13 to output the plural cleaning motions by outputting the driving signal, so as to drive the cleaning unit 111 to perform the corresponding motion. Therefore, when the output shaft 131 outputs the plurality of cleaning motions, the cleaning unit 111 generates the vibration to clean the teeth. Meanwhile, since the first angles of some cleaning motions may be larger than the first angles of the adjacent cleaning motions and the second angles are smaller than the second angles of the adjacent cleaning motions, the center positions of the swing angles of these cleaning motions differ from the center positions of the swing angles of the adjacent cleaning motions. When the output shaft 131 continuously or intermittently outputs the plurality of cleaning motions, the cleaning unit 111 produces the sweeping effect, such that the action that the human hand swings the brush head to clean the teeth can be imitated to perform reciprocating sweeping cleaning on the same tooth region, so as to clean the oral cavity more thoroughly and deeply, thus improving the tooth cleaning effect.

In some embodiments of the present application, an amplitude of the cleaning motion is a sum of the first angle and the second angle of the cleaning motion: the cleaning motion has the same amplitude as the adjacent cleaning motion; or, the amplitudes of the plurality of cleaning motions are the same.

In the embodiment of the present application, the sum of the first angle and the second angle of each cleaning motion is also referred to as the amplitude. In the aforementioned plurality of cleaning motions, the amplitude of at least one cleaning motion may be configured to be the same as the amplitude of its adjacent cleaning motion. The first angles of these cleaning motions are larger than the first angles of their adjacent cleaning motions and the second angles are smaller than the second angles of their adjacent cleaning motions. Therefore, the center positions of the swing angles of these cleaning motions are different from the center positions of the swing angles of their adjacent cleaning motions. Therefore, when the output shaft 131 outputs these cleaning motions and their adjacent cleaning motions, the center positions of the swing angles of the cleaning motions are rotated, and the cleaning unit 111 generates the sweeping effect, thus improving the tooth cleaning effect.

Exemplarily, the cleaning motion and the adjacent cleaning motion may be the aforementioned cleaning motion A and cleaning motion B respectively, the amplitudes of both the cleaning motion A and the cleaning motion B are 4 degrees, but the first angle and the second angle of each of the cleaning motion A and the cleaning motion B are not equal to each other, and therefore, the center positions of the swing angles of both the cleaning motion A and the cleaning motion B are also different.

Furthermore, all the aforementioned plurality of cleaning motions may be configured to have the same amplitude. The first angle of at least one of the plural cleaning motions is larger than the first angle of the adjacent cleaning motion and the second angle is smaller than the second angle of the adjacent cleaning motion. The first angles of the remaining cleaning motions may be equal to or unequal to (greater than or smaller than) the first angles of the adjacent cleaning motions, and the second angles of the remaining cleaning motions may also be equal or unequal to the second angles of the adjacent cleaning motions, which is not limited in the embodiment of the present application. Since the amplitude of each cleaning motion is kept constant while the cleaning unit 111 generates the sweeping effect when the above cleaning motions are output, the output cleaning motions can be regular and not disordered, thereby improving the cleaning effect.

In some embodiments of the present application, in the output sequence: the control assembly 14 generates the driving signal to make the first angle of a current cleaning motion not smaller than the first angle of a previous cleaning motion, and the second angle of the current cleaning motion not larger than the second angle of the previous cleaning motion, until the first angle of the cleaning motion reaches a first preset threshold; and/or, the control assembly 14 generates the driving signal to make the first angle of the current cleaning motion not greater than the first angle of the previous cleaning motion, and the second angle of the current cleaning motion not smaller than the second angle of the previous cleaning motion, until the first angle of the cleaning motion reaches a second preset threshold.

In the embodiment of the present application, the output shaft 131 of the actuation assembly 13 may output a plurality of periodic cleaning motions under the driving of the driving signal generated by the control assembly 14. According to the output sequence of the cleaning motions, under the driving of the driving signal, the first angle of the current cleaning motion output by the output shaft 131 may be greater than or equal to the first angle of the previous cleaning motion, and the second angle of the current cleaning motion may be smaller than or equal to the second angle of the previous cleaning motion, such that the first angle of the cleaning motion is continuously or intermittently increased, and correspondingly, the second angle is continuously or intermittently decreased, and therefore, the cleaning unit 111 sweeps along the first direction until the first angle of the cleaning motion reaches the first preset threshold.

The first preset threshold determines a maximum swing angle of the cleaning unit 111 in the first direction, that is, determines a cleaning sweep range of the cleaning unit 111 in the first direction. The user can set the first preset threshold according to actual needs of the user. Exemplarily, the first preset threshold may be an angle value smaller than 20 degrees, 16 degrees, or 12 degrees.

Similarly, the control assembly 14 may generate the driving signal according to the output sequence of the cleaning motions, so as to make the first angle of the current cleaning motion output by the output shaft 131 smaller than or equal to the first angle of the previous cleaning motion and the second angle of the current cleaning motion larger than or equal to the second angle of the previous cleaning motion under the driving of the driving signal, such that the first angle of the cleaning motion is continuously or intermittently decreased and the second angle is continuously or intermittently increased, and therefore, the cleaning unit 111 sweeps along the second direction until the first angle of the cleaning motion reaches the second preset threshold. The second preset threshold determines a minimum swing angle of the cleaning unit 111 in the first direction. The user can set the second threshold according to actual needs of the user. In practical applications, the second preset threshold may be as small as 0 degrees. When the first angle of the cleaning motion reaches the second preset threshold, correspondingly, the second angle of the cleaning motion may be an angle value smaller than 20 degrees, 16 degrees or 12 degrees.

It should be noted that the first angle of the current cleaning motion may be equal to the first angle of the previous cleaning motion, and the second angle of the current cleaning motion may also be equal to the second angle of the previous cleaning motion, such that during a gradual increase or decrease of the first angle of the cleaning motion, the first angles of two or more consecutive cleaning motions may be equal. Similarly, during a gradual decrease or increase of the second angle of the cleaning motion, the second angles of two or more consecutive cleaning motions may be equal. At this point, the cleaning unit 111 cleans the teeth only by the vibration and does not sweep and perform composite cleaning in various ways.

In the embodiment of the present application, the output shaft 131 can also output the above two cleaning motions, such that in a first half cycle, the first angle of the cleaning motion can be increased, and the second angle of the cleaning motion can be decreased until the first angle of the cleaning motion reaches the first preset threshold. Then, in a second half cycle, the first angle of the cleaning motion is decreased and the second angle of the cleaning motion is increased until the first angle of the cleaning motion reaches the second preset threshold. The output shaft 131 can generate the effect of repeatedly sweeping back and forth in the first direction and the second direction by periodically outputting the above two motions.

In some embodiments of the present application, the control assembly 14 generates the driving signal to make the first angle of the current cleaning motion increased by a preset increment value compared to the first angle of the previous cleaning motion, and the second angle of the current cleaning motion decreased by a preset decrement value compared to the second angle of the previous cleaning motion until the first angle of the cleaning motion reaches the first preset threshold; and/or the control assembly 14 generates the driving signal to make the first angle of the current cleaning motion decreased by the preset decrement value compared to the first angle of the previous cleaning motion and the second angle of the current cleaning motion increased by the preset increment value compared to the second angle of the previous cleaning motion until the first angle of the cleaning motion reaches the second preset threshold; the increment value is equal to the decrement value of the current cleaning motion.

In the embodiment of the present application, the output shaft 131 of the actuation assembly 13 may output a plurality of periodic cleaning motions under the driving of the driving signal generated by the control assembly 14. In the output sequence of the cleaning motions, under the driving of the driving signal, the first angle of the current cleaning motion output by the output shaft 131 may be increased by the preset increment value compared to the first angle of the previous cleaning motion and the second angle of the current cleaning motion may be decreased by the preset decrement value compared to the first angle of the previous cleaning motion until the first angle of the cleaning motion reaches the first preset threshold. Since the increment value and the decrement value of the current cleaning motion are equal, the amplitude of the current cleaning motion is the same as that of the previous cleaning motion, and a rotation angle of the center position of the swing angle of the cleaning unit 111 in the first direction can be equal to the increment value and the decrement value.

In an example, in the cleaning motions in half a cycle, the driving signal generated by the control assembly 14 may drive the output shaft 131 of the actuation assembly 13 to output 12 cleaning motions which are cleaning motion 1 to cleaning motion 12 respectively, the preset increment value and the preset decrement value are both 1 degree, and the sum of the first angle and the second angle of each cleaning motion is 13 degrees. The cleaning motion 1 corresponds to the first angle of 1 degree and the second angle of 12 degrees. The cleaning motion 2 corresponds to the first angle of 2 degree and the second angle of 11 degrees. The cleaning motion 3 corresponds to the first angle of 3 degree and the second angle of 10 degrees. By analogy, the cleaning motion 11 corresponds to the first angle of 11 degree and the second angle of 2 degrees. The cleaning motion 12 corresponds to the first angle of 12 degree and the second angle of 1 degrees.

Similarly, the control assembly 14 may generate the driving signal according to the output sequence of the cleaning motions, such that under the driving of the driving signal, the first angle of the current cleaning motion output by the output shaft 131 may be decreased by the preset decrement value compared with the first angle of the previous cleaning motion, and the second angle of the current cleaning motion may be increased by the preset increment value compared with the second angle of the previous cleaning motion until the first angle of the cleaning motion reaches the second preset threshold. Since the increment value and the decrement value of the current cleaning motion are equal, the amplitude of the current cleaning motion is the same as that of the previous cleaning motion, and a rotation angle of the center position of the swing angle of the cleaning unit 111 in the second direction can be equal to the increment value and the decrement value.

Briefly, the cleaning motions output by the output shaft 131 of the actuation assembly 13 are in a reverse order of the cleaning motions described above. In an example, the driving signal generated by the control assembly 14 may drive the output shaft 131 of the actuation assembly 13 to output 12 cleaning motions which are cleaning motion 13 to cleaning motion 24 respectively, the preset increment value and the preset decrement value are both 1 degree, and the sum of the first angle and the second angle of each cleaning motion is 13 degrees. The first and second angles of the cleaning motion 13 are the same as those of the cleaning motion 12, the first and second angles of the cleaning motion 14 are the same as those of the cleaning motion 11, and by analogy, the first and second angles of the cleaning motion 24 are the same as those of the cleaning motion 1.

Furthermore, the preset increment values of different cleaning motions with respect to the previous cleaning motion may be different, and correspondingly, the preset decrement values of different cleaning motions with respect to the previous cleaning motion are also different, such that a rotation speed of the center position of the swing angle of the cleaning motion is changed.

In the embodiment of the present application, the output shaft 131 continuously adjusts the first angle and the second angle of each cleaning motion, such that the cleaning unit outputs the cleaning motions with the same amplitude and continuously changed swing-angle center positions, and the center positions of the swing angles continuously reciprocate to form stable and orderly sweeping and vibrations. The output shaft 131 can further generate the effect of continuously and repeatedly sweeping back and forth in the first direction and the second direction by periodically outputting the above two motions.

In some embodiments of the present application, the control assembly 14 controls a direction of a current flowing into the actuation assembly 13 to determine the rotation direction of the output shaft 131; and/or the driving signal is a pulse width modulation signal, the control assembly 14 generates a pulse width modulation signal with a first duty cycle to allow the output shaft 131 to correspondingly output the first motion, and the control assembly 14 generates a pulse width modulation signal with a second duty cycle to allow the output shaft 131 to correspondingly output the second motion.

In the embodiment of the present application, when the direction of the current flowing into the actuation assembly 13 is different, the rotation direction of the output shaft 131 of the actuation assembly 13 is different. Exemplarily, the actuation assembly 13 may include a positive input terminal and a negative input terminal, and when the current flows into the actuation assembly from the positive input terminal, the rotation direction of the output shaft 131 of the actuation assembly 13 is clockwise. When the current flows into the actuation assembly from the negative input terminal, the rotation direction of the output shaft 131 of the actuation assembly 13 is counterclockwise. Therefore, the control assembly 14 can control the rotation direction of the output shaft 131 to be clockwise or counterclockwise by controlling the direction of the current flowing into the actuation assembly 13.

The driving signal may be a pulse width modulation signal, and the duty cycle of the pulse width modulation signal determines the first angle and the second angle of rotation of the output shaft 131. The control assembly 14 may generate the pulse width modulation signal with the first duty cycle, and under the driving of the pulse width modulation signal, the output shaft 131 of the actuation assembly 13 may output the first motion, and the first angle of the first motion depends on the first duty cycle. The larger the first duty cycle, the larger the first angle.

Similarly, the control assembly 14 may further generate the pulse width modulation signal with the second duty cycle, and under the driving of the pulse width modulation signal, the output shaft 131 of the actuation assembly 13 may output the second motion, and the second angle of the second motion depends on the second duty cycle. The larger the second duty cycle, the larger the second angle.

In some embodiments of the present application, a sum of the first duty cycle and the second duty cycle corresponding to the cleaning motion is an output quantity; at least two of the plurality of cleaning motions have the same output quantity; or, the output quantities of the plurality of cleaning motions are the same.

In the embodiment of the present application, the duty cycle of the driving signal corresponding to the first motion is the first duty cycle, the duty cycle of the driving signal corresponding to the second motion is the second duty cycle, and the sum of the first duty cycle and the second duty cycle may be referred to as the output quantity. In the plurality of cleaning motions, the output quantities of at least two cleaning motions can be the same, such that the amplitudes of these cleaning motions can be the same.

Furthermore, in the aforementioned plurality of cleaning motions, it is also possible to configure all the cleaning motions to have the same output quantity, such that the amplitudes of all the cleaning motions are the same. The first angle of at least one of the plural cleaning motions is larger than the first angle of the adjacent cleaning motion, the second angle is smaller than the second angle of the adjacent cleaning motion, and the cleaning unit 111 generates the sweeping effect when these cleaning motions are output. The first angles of the remaining cleaning motions may be equal or unequal to the first angles of the adjacent cleaning motions, and the second angles of the remaining cleaning motions may be equal or unequal to the second angles of the adjacent cleaning motions, which is not limited in the embodiment of the present application.

Since the amplitude of each cleaning motion is kept constant when the above cleaning motions are output, the output cleaning motions can be regular and not disordered, thereby improving the tooth cleaning effect.

In some embodiments of the present application, the control assembly 14 adjusts the pulse width modulation signal with the first duty cycle and the pulse width modulation signal with the second duty cycle, so as to make the first angle of the current cleaning motion not smaller than the first angle of the previous cleaning motion and the second angle of the current cleaning motion not greater than the second angle of the previous cleaning motion, until the first duty cycle of the cleaning motion reaches a third preset threshold; and/or, the control assembly 14 adjusts the pulse width modulation signal with the first duty cycle and the pulse width modulation signal with the second duty cycle, so as to make the first angle of the current cleaning motion not greater than the first angle of the previous cleaning motion, and the second angle of the current cleaning motion not smaller than the second angle of the previous cleaning motion, until the first duty cycle of the cleaning motion reaches a fourth preset threshold.

In the embodiment of the present application, the output shaft 131 of the actuation assembly 13 may output a plurality of periodic cleaning motions under the driving of the driving signal generated by the control assembly 14. The control assembly 14 may adjust the pulse width modulation signal with the first duty cycle and the pulse width modulation signal with the second duty cycle according to the output sequence of the cleaning motions, such that under the driving of the pulse width modulation signal, the first angle of the current cleaning motion is greater than or equal to the first angle of the previous cleaning motion and the second angle of the current cleaning motion is smaller than or equal to the second angle of the previous cleaning motion until the first duty cycle of the current cleaning motion reaches the third preset threshold. Therefore, the center position of the swing angle of the cleaning motion continuously or intermittently rotates in the first direction to create the sweeping effect. The third preset threshold determines a maximum value of the first angle, and when the first duty cycle reaches the third preset threshold, the first angle of the cleaning motion reaches the maximum value, and the center position of the swing angle of the cleaning unit 111 reaches a limit value in the first direction.

Similarly, the control assembly 14 may further adjust the pulse width modulation signal with the first duty cycle and the pulse width modulation signal with the second duty cycle according to the output sequence of the cleaning motions, such that under the driving of the pulse width modulation signal, the first angle of the current cleaning motion is smaller than or equal to the first angle of the previous cleaning motion, and the second angle of the current cleaning motion is larger than or equal to the second angle of the previous cleaning motion until the first duty cycle of the current cleaning motion reaches the fourth preset threshold. Therefore, the center position of the swing angle of the cleaning motion continuously rotates in the second direction to create the sweeping effect. The fourth preset threshold determines a minimum value of the first angle, and when the first duty cycle reaches the fourth preset threshold, the first angle of the cleaning motion reaches the minimum value, and the center position of the swing angle of the cleaning unit 111 reaches a limit value in the second direction.

It should be noted that the first duty cycle of the current cleaning motion may be equal to the first duty cycle of the previous cleaning motion, and the second duty cycle of the current cleaning motion may also be equal to the second duty cycle of the previous cleaning motion, such that during a continuous or intermittent increase or decrease of the first duty cycle of the cleaning motion, the first duty cycles and the first angles of two or more consecutive cleaning motions may be equal. Similarly, during a continuous or intermittent decrease or increase of the second duty cycle of the cleaning motion, the second duty cycles and the second angles of two or more consecutive cleaning motions may be equal. At this point, the cleaning unit 111 cleans the teeth only by the vibration and does not sweep.

In the embodiment of the present application, the output shaft 131 may also output the above two cleaning motions, such that by adjusting the duty cycle of the pulse width modulation signal, in the first half cycle, the first angle of the current cleaning motion is continuously or intermittently increased, the second angle is continuously or intermittently decreased, and the center position of the swing angle of the cleaning motion first rotates in the first direction to form sweeping in the first direction. Then, in the second half cycle, the first angle of the cleaning motion is continuously or intermittently decreased, the second angle is continuously or intermittently increased, and the center position of the swing angle of the cleaning motion rotates in the second direction to form sweeping in the second direction. The output shaft 131 can generate the effect of repeatedly sweeping back and forth in the first direction and the second direction by periodically outputting the above two motions.

In some embodiments of the present application, the cleaning motions in the periodic motion have the same output quantity, and in the output sequence: the control assembly 14 increases the pulse width modulation signal with the first duty cycle and decreases the pulse width modulation signal with the second duty cycle, so as to make the first angle of the current cleaning motion greater than the first angle of the previous cleaning motion and the second angle of the current cleaning motion smaller than the second angle of the previous cleaning motion, until the first duty cycle of the cleaning motion reaches the third preset threshold; and/or, the control assembly 14 decreases the pulse width modulation signal with the first duty cycle and increases the pulse width modulation signal with the second duty cycle, so as to make the first angle of the current cleaning motion smaller than the first angle of the previous cleaning motion, and the second angle of the current cleaning motion greater than the second angle of the previous cleaning motion, until the first duty cycle of the cleaning motion reaches the fourth preset threshold.

In the embodiment of the present application, the cleaning motions in the periodic motion have the same output quantity, and therefore, the cleaning motions in the periodic motion have the same amplitude.

The output shaft 131 of the actuation assembly 13 may output a plurality of periodic cleaning motions under the driving of the driving signal generated by the control assembly 14. The control assembly 14 may increase the pulse width modulation signal with the first duty cycle and decrease the pulse width modulation signal with the second duty cycle according to the output sequence of the cleaning motions, such that under the driving of the pulse width modulation signal, the first angle of the current cleaning motion is greater than the first angle of the previous cleaning motion and the second angle of the current cleaning motion is smaller than the second angle of the previous cleaning motion until the first duty cycle of the current cleaning motion reaches the third preset threshold.

In the embodiment of the present application, the first duty cycles and the second duty cycles of the adjacent cleaning motions are not equal, and therefore, the first angles and the second angles of the adjacent cleaning motions are not equal. The first angle of the cleaning motion exhibits a continuously rising trend and the second angle exhibits a continuously falling trend. Therefore, the center position of the swing angle of the cleaning motion continuously rotates in the first direction to create the sweeping effect. When the first duty cycle reaches the third preset threshold, the center position of the swing angle of the cleaning motion reaches the limit value in the first direction.

Similarly, the control assembly 14 may decrease the pulse width modulation signal with the first duty cycle and increase the pulse width modulation signal with the second duty cycle according to the output sequence of the cleaning motions, such that under the driving of the pulse width modulation signal, the first angle of the current cleaning motion is smaller than the first angle of the previous cleaning motion and the second angle of the current cleaning motion is greater than the second angle of the previous cleaning motion until the first duty cycle of the current cleaning motion reaches the fourth preset threshold.

In the embodiment of the present application, the first duty cycles and the second duty cycles of the adjacent cleaning motions are not equal, and therefore, the first angles and the second angles of the adjacent cleaning motions are not equal. The first angle of the cleaning motion exhibits a continuously falling trend and the second angle exhibits a continuously rising trend. Therefore, the center position of the swing angle of the cleaning motion continuously rotates in the second direction to create the sweeping effect. When the first duty cycle reaches the fourth preset threshold, the center position of the swing angle of the cleaning motion reaches the limit value in the second direction.

In the embodiment of the present application, the output shaft 131 continuously adjusts the first angle and the second angle of each cleaning motion, such that the cleaning unit outputs the cleaning motions with the same amplitude and continuously changed swing-angle center positions, and the center positions of the swing angles continuously reciprocate to form stable and orderly sweeping and vibrations. The output shaft 131 can generate the effect of repeatedly sweeping back and forth in the first direction and the second direction by periodically outputting the above two motions.

In some embodiments of the present application, the control assembly 14 determines the amplitude, the first angle and/or the second angle according to user operations, sensed data and/or historical usage data.

In the embodiment of the present application, the control assembly 14 may determine the amplitude of the cleaning motion according to the user operation. Specifically, the oral nursing device may be provided with a plurality of keys for selecting the amplitude, and the user may generate different control signals by selecting different keys, so as to control the amplitude of the cleaning motion.

Exemplarily, if the user prefers to clean the teeth at a large angle, the amplitude of the cleaning motion may be set to a large value by the corresponding user operation. If the user prefers to clean the teeth at a small angle, the amplitude of the cleaning motion may be set to a small value by the corresponding user operation.

Furthermore, a sensor, such as a gyroscope, may be provided in the oral nursing device. When a different action of the user is detected, the amplitude of the cleaning motion may be determined according to a type of the action.

Different users have different habits and requirements for using the oral nursing device, and the control assembly 14 can determine the amplitude of the cleaning motion based on the historical usage data, such as habit data of the users for using the oral nursing device or user-defined setting data, so as to make the amplitude of the cleaning motion better satisfy individual habits of the users, thereby further improving use experience of the users.

Similarly, the control assembly 14 can also control and adjust the first angle and/or the second angle as well as the increment/decrement value of the first angle and/or the second angle in the same way, so as to adjust parameters of the sweeping speed, the amplitude, or the like.

In some embodiments of the present application, the control assembly 14 determines the output quantity, the first duty cycle and/or the second duty cycle according to the user operations, the sensed data and/or the historical usage data.

In the embodiment of the present application, the control assembly 14 may determine the output quantity of the cleaning motion according to the user operation. Specifically, the oral nursing device may be provided with a plurality of keys for selecting the output quantity, and the user may generate different control signals by selecting different keys, so as to control the output quantity of the cleaning motion, that is, control the amplitude of the cleaning motion.

Exemplarily, if the user prefers to clean the teeth at a large angle, the output quantity of the cleaning motion can be set to a large value, and therefore, the amplitude of the cleaning motion can be large. If the user prefers to clean the teeth at a small angle, the output quantity of the cleaning motion can be set to a small value, and therefore, the amplitude of the cleaning motion can be small.

Furthermore, a sensor, such as a gyroscope, may be provided in the oral nursing device. When a different action of the user is detected, the amplitude of the cleaning motion may be determined according to a type of the action.

Different users have different habits and requirements for using the oral nursing device, and the control assembly 14 can determine the output quantity of the cleaning motion based on the historical usage data, such as habit data of the users for using the oral nursing device or user-defined setting data, so as to make the output quantity of the cleaning motion better satisfy individual habits of the users, thereby further improving use experience of the users.

Similarly, the control assembly 14 can also control and adjust the first duty cycle and/or the second duty cycle as well as the increment/decrement value of the first angle and/or the second angle in the same way, so as to adjust parameters of the sweeping speed, the amplitude, or the like.

In some embodiments of the present application, the frequency of the actuation assembly 13 is more than 100Hz.

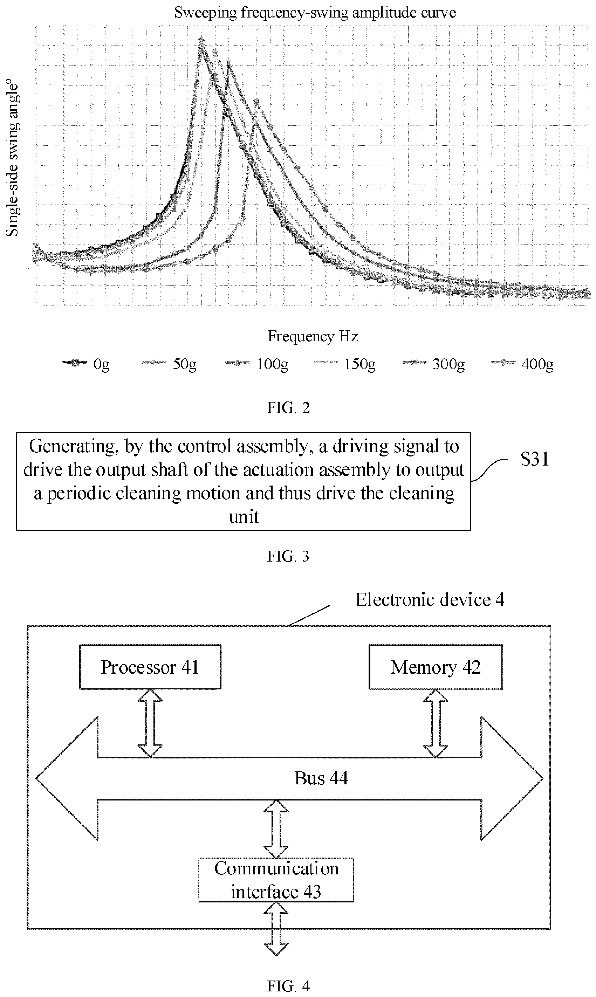

In the embodiment of the present application, as shown in FIG. 2, a pressure applied to the grip portion 12 also affects the amplitude of the output shaft 131. Exemplarily, the user may apply a pressure of 0 grams, 50 grams, 100 grams, 150 grams, 300 grams, or 400 grams to the grip portion 12.

In the case where the pressure applied by the user to the grip portion 12 is determined, when the frequency of the actuation assembly 13 is different, the amplitude of the output shaft 131 is also different. Since the frequency of the actuation assembly 13 is related to the amplitude of the output shaft 131 of the actuation assembly 13, the amplitude of the output shaft 131 can be changed by changing the frequency of the actuation assembly 13. In order to control the amplitude of the output shaft 131 within a reasonable range, the frequency of the actuation assembly 13 may be controlled to be more than 100Hz.

Exemplarily, when the frequency of the actuation assembly 13 is more than 100Hz, the amplitude of the output shaft 131 of the actuation assembly 13 is greater than 3 degrees, such that the amplitude is within the reasonable range and is not excessively small, low-frequency large-swing angle sweeping and vibrations are achieved, and the teeth can be cleaned more effectively.

In some embodiments of the present application, the frequency of the actuation assembly 13 ranges from 100Hz to 300Hz.

In the embodiment of the present application, in order to better control the amplitude of the output shaft 131, and avoid or reduce a force load applied by the user/teeth on the cleaning unit 111 which results in weakening of power of the actuation assembly 13 to cause the amplitude to be excessively small, the control assembly 14 may control the frequency of the driving signal within the range of 100Hz to 300Hz, such that the frequency of the actuation assembly 13 is within the range of 100Hz to 300Hz, and then, the amplitude of the output shaft 131 is within the reasonable range, so as to realize the low-frequency large-swing angle sweeping and vibrations. Therefore, an injury to the gum when the amplitude is excessively large may be avoided, and a poor tooth cleaning effect when the amplitude is excessively small can also be avoided.

In some embodiments of the present application, the frequency of the actuation assembly 13 is substantially constant.

In the embodiment of the present application, the control assembly 14 may output the driving signal with a substantially constant frequency, such that the frequency of the actuation assembly 13 is also substantially constant, and further, the frequency of the output shaft 131 is also substantially constant, which may improve the use experience of the user.

Based on the oral nursing device shown in FIG. 1, embodiments of the present application provide a control method of the oral nursing device, the method is applied to the oral nursing device, an execution subject is the control assembly 14 of the oral nursing device, and as shown in FIG. 3, the method includes the following steps:

S31: generating, by the control assembly 14, a driving signal to drive the output shaft 131 of the actuation assembly 13 to output a periodic cleaning motion and thus drive the cleaning unit 111;

wherein the periodic cleaning motion includes a plurality of cleaning motions, and each of the plural cleaning motions includes a first motion and a second motion; the driving signal is a pulse width modulation signal; the control assembly 14 generates a pulse width modulation signal with a first duty cycle to allow the output shaft 131 to correspondingly output the first motion, the control assembly 14 generates a pulse width modulation signal with a second duty cycle to allow the output shaft 131 to correspondingly output the second motion, and the pulse width modulation signal with the first duty cycle and the pulse width modulation signal with the second duty cycle have different current input directions; the first duty cycle of at least one cleaning motion is greater than that of an adjacent cleaning motion, and the second duty cycle of the at least one cleaning motion is smaller than that of the adjacent cleaning motion.

In some embodiments of the present application, a sum of the first duty cycle and the second duty cycle corresponding to the cleaning motion is an output quantity; at least two of the plurality of cleaning motions have the same output quantity; or, the output quantities of the plurality of cleaning motions are the same.

In some embodiments of the present application, in an output sequence: the control assembly 14 adjusts the pulse width modulation signal with the first duty cycle and the pulse width modulation signal with the second duty cycle, so as to make the first duty cycle of the current cleaning motion not smaller than the first duty cycle of the previous cleaning motion and the second duty cycle of the current cleaning motion not greater than the second duty cycle of the previous cleaning motion, until the first duty cycle of the cleaning motion reaches a third preset threshold; and/or, the control assembly 14 adjusts the pulse width modulation signal with the first duty cycle and the pulse width modulation signal with the second duty cycle, so as to make the first duty cycle of the current cleaning motion not greater than the first duty cycle of the previous cleaning motion, and the second duty cycle of the current cleaning motion not smaller than the second duty cycle of the previous cleaning motion, until the first duty cycle of the cleaning motion reaches a fourth preset threshold.

In some embodiments of the present application, the cleaning motions in the periodic motion have the same output quantity; the control assembly 14 increases the pulse width modulation signal with the first duty cycle and decreases the pulse width modulation signal with the second duty cycle until the first duty cycle of the cleaning motion reaches the third preset threshold; and/or, the control assembly 14 decreases the pulse width modulation signal with the first duty cycle and increases the pulse width modulation signal with the second duty cycle until the first duty cycle of the cleaning motion reaches the fourth preset threshold.

In some embodiments of the present application, the control assembly 14 determines the output quantity, the first duty cycle and/or the second duty cycle according to user operations, sensed data and/or historical usage data.

In some embodiments of the present application, the frequency of the actuation assembly 13 is more than 100Hz.

In some embodiments of the present application, the frequency of the actuation assembly 13 ranges from 100Hz to 300Hz.

In some embodiments of the present application, the frequency of the actuation assembly 13 is substantially constant.

The control method of the oral nursing device according to the embodiment of the present application corresponds to the actions of the control assembly in the above embodiment, and implementation principles and technical effects thereof are the same and are not repeated herein.

In a third aspect, embodiments of the present application provide an electronic device, which can effectively improve a tooth cleaning effect.

As shown in FIG. 4, the electronic device according to the embodiment of the present application may include a processor 41 and a memory 42. The electronic device 4 may further include a communication interface 43 and a bus 44. The processor 41, the communication interface 43, and the memory 42 may be communicated with each other through the bus 44. The communication interface 43 may be configured for information transmission. The processor 41 may invoke logic instructions in the memory 42 to perform the control method of an oral nursing device according to the embodiment described above.

Furthermore, the logic instructions in the memory 42 may be implemented in the form of software functional units and stored in a computer-readable storage medium when sold or used as independent products.

As a computer-readable storage medium, the memory 42 may be configured to store software programs and computer-executable programs, such as program instructions/modules corresponding to the method according to the embodiment of the present application. By executing the program instructions/modules stored in the memory 42, the processor 41 executes functional applications and data processing, that is, implements the control method of an oral nursing device according to the above-described embodiment.

The memory 42 may include a program storage region and a data storage region, and the program storage region may store an operating system and an application required for at least one function; the data storage region may store data created according to the use of a terminal device, or the like. Furthermore, the memory 42 may include a high speed random access memory and may also include a non-volatile memory.

In a fourth aspect, embodiments of the present application further provide a computer-readable storage medium storing computer-executable instructions configured to perform the control method of an oral nursing device according to the above embodiments.

The storage medium described above may be a transitory computer-readable storage medium or a non-transitory computer-readable storage medium.

The above description and the drawings sufficiently illustrate the embodiments of the disclosure to enable those skilled in the art to practice them. Other embodiments may incorporate structural, logical, electrical, process, and other changes. The embodiments merely typify possible variations. Individual components and functions are optional unless explicitly required, and the sequence of operations may vary. Parts and features of some embodiments may be included in or substituted for parts and features of other embodiments. Moreover, the terms used in the present application are intended only to describe the embodiments and are not intended to limit the claims.

## Claims

1. An oral nursing device, comprising:
a cleaning portion at least provided with a cleaning unit;
a grip portion connected with the cleaning portion;
an actuation assembly at least partially accommodated in the grip portion, the actuation assembly comprising an output shaft engaged with the cleaning portion; and
a control assembly generating a driving signal to drive the output shaft of the actuation assembly to output a periodic cleaning motion and thus drive the cleaning unit,
wherein the periodic cleaning motion comprises a plurality of cleaning motions, each of the plural cleaning motions comprises a first motion and a second motion, and as the first motion, the output shaft rotates by a first angle along a first direction and then rotates back to an initial position with a first axis as a rotation center line, and as the second motion, the output shaft rotates by a second angle along a second direction and then rotates back to the initial position with the first axis as the rotation center line; the first direction and the second direction are opposite;
the first angle of at least one cleaning motion is greater than that of an adjacent cleaning motion, and the second angle of the at least one cleaning motion is smaller than that of the adjacent cleaning motion.

2. The device according to claim 1, wherein an amplitude of the cleaning motion is a sum of the first angle and the second angle of the cleaning motion:
the cleaning motion has the same amplitude as the adjacent cleaning motion; or,
the amplitudes of the plurality of cleaning motions are the same.

3. The device according to claim 1 or 2, wherein in an output sequence:
the control assembly generates the driving signal to make the first angle of a current cleaning motion not smaller than the first angle of a previous cleaning motion, and the second angle of the current cleaning motion not larger than the second angle of the previous cleaning motion, until the first angle of the cleaning motion reaches a first preset threshold; and/or,
the control assembly generates the driving signal to make the first angle of the current cleaning motion not greater than the first angle of the previous cleaning motion, and the second angle of the current cleaning motion not smaller than the second angle of the previous cleaning motion, until the first angle of the cleaning motion reaches a second preset threshold.

4. The device according to claim 3, wherein the control assembly generates the driving signal to make the first angle of the current cleaning motion increased by a preset increment value compared to the first angle of the previous cleaning motion, and the second angle of the current cleaning motion decreased by a preset decrement value compared to the second angle of the previous cleaning motion until the first angle of the cleaning motion reaches the first preset threshold; and/or
the control assembly generates the driving signal to make the first angle of the current cleaning motion decreased by the preset decrement value compared to the first angle of the previous cleaning motion and the second angle of the current cleaning motion increased by the preset increment value compared to the second angle of the previous cleaning motion until the first angle of the cleaning motion reaches the second preset threshold;
the increment value is equal to the decrement value of the current cleaning motion.

5. The device according to any one of claims 1 to 4, wherein the control assembly controls a direction of a current flowing into the actuation assembly to determine a rotation direction of the output shaft; and/or
the driving signal is a pulse width modulation signal, the control assembly generates a pulse width modulation signal with a first duty cycle to allow the output shaft to correspondingly output the first motion, and the control assembly generates a pulse width modulation signal with a second duty cycle to allow the output shaft to correspondingly output the second motion.

6. The device according to claim 5, wherein a sum of the first duty cycle and the second duty cycle corresponding to the cleaning motion is an output quantity;
at least two of the plurality of cleaning motions have the same output quantity; or,
the output quantities of the plurality of cleaning motions are the same.

7. The device according to claim 5, wherein in the output sequence:
the control assembly adjusts the pulse width modulation signal with the first duty cycle and the pulse width modulation signal with the second duty cycle, so as to make the first angle of the current cleaning motion not smaller than the first angle of the previous cleaning motion and the second angle of the current cleaning motion not greater than the second angle of the previous cleaning motion, until the first duty cycle of the cleaning motion reaches a third preset threshold; and/or,
the control assembly adjusts the pulse width modulation signal with the first duty cycle and the pulse width modulation signal with the second duty cycle, so as to make the first angle of the current cleaning motion not greater than the first angle of the previous cleaning motion, and the second angle of the current cleaning motion not smaller than the second angle of the previous cleaning motion, until the first duty cycle of the cleaning motion reaches a fourth preset threshold.

8. The device according to claim 7, wherein the cleaning motions in the periodic motion have the same output quantity, and in the output sequence:
the control assembly increases the pulse width modulation signal with the first duty cycle and decreases the pulse width modulation signal with the second duty cycle, so as to make the first angle of the current cleaning motion greater than the first angle of the previous cleaning motion and the second angle of the current cleaning motion smaller than the second angle of the previous cleaning motion, until the first duty cycle of the cleaning motion reaches the third preset threshold; and/or,
the control assembly decreases the pulse width modulation signal with the first duty cycle and increases the pulse width modulation signal with the second duty cycle, so as to make the first angle of the current cleaning motion smaller than the first angle of the previous cleaning motion, and the second angle of the current cleaning motion greater than the second angle of the previous cleaning motion, until the first duty cycle of the cleaning motion reaches the fourth preset threshold.

9. The device according to claim 2, wherein the control assembly determines the amplitude, the first angle and/or the second angle according to user operations, sensed data and/or historical usage data.

10. The device according to claim 6, wherein the control assembly determines the output quantity, the first duty cycle and/or the second duty cycle according to the user operations, the sensed data and/or the historical usage data.

11. The device according to claim 1, wherein a frequency of the actuation assembly is more than 100Hz.

12. The device according to claim 11, wherein the frequency of the actuation assembly ranges from 100Hz to 300Hz.

13. The device according to claim 1, wherein the frequency of the actuation assembly is substantially constant.

14. The device according to claim 3, wherein the first preset threshold does exceed 12 degrees, 16 degrees, or 20 degrees.

15. An oral nursing device control method applied to an oral nursing device, the oral nursing device comprising:
a cleaning portion at least provided with a cleaning unit;
a grip portion connected with the cleaning portion;
an actuation assembly at least partially accommodated in the grip portion, the actuation assembly comprising an output shaft engaged with the cleaning portion; and
a control assembly;
the method comprising:
generating, by the control assembly, a driving signal to drive the output shaft of the actuation assembly to output a periodic cleaning motion and thus drive the cleaning unit;
wherein the periodic cleaning motion comprises a plurality of cleaning motions, and each of the plural cleaning motions comprises a first motion and a second motion; the driving signal is a pulse width modulation signal; the control assembly generates a pulse width modulation signal with a first duty cycle to allow the output shaft to correspondingly output the first motion, the control assembly generates a pulse width modulation signal with a second duty cycle to allow the output shaft to correspondingly output the second motion, and the pulse width modulation signal with the first duty cycle and the pulse width modulation signal with the second duty cycle have different current input directions;
the first duty cycle of at least one cleaning motion is greater than that of an adjacent cleaning motion, and the second duty cycle of the at least one cleaning motion is smaller than that of the adjacent cleaning motion.

16. The method according to claim 15, wherein a sum of the first duty cycle and the second duty cycle corresponding to the cleaning motion is an output quantity;
at least two of the plurality of cleaning motions have the same output quantity; or,
the output quantities of the plurality of cleaning motions are the same.

17. The method according to claim 15, wherein in an output sequence:
the control assembly adjusts the pulse width modulation signal with the first duty cycle and the pulse width modulation signal with the second duty cycle until the first duty cycle of the cleaning motion reaches a third preset threshold; and/or,
the control assembly adjusts the pulse width modulation signal with the first duty cycle and the pulse width modulation signal with the second duty cycle until the first duty cycle of the cleaning motion reaches a fourth preset threshold.

18. The method according to claim 17, wherein the cleaning motions in the periodic motion have the same output quantity;
the control assembly increases the pulse width modulation signal with the first duty cycle and decreases the pulse width modulation signal with the second duty cycle until the first duty cycle of the cleaning motion reaches the third preset threshold; and/or,
the control assembly decreases the pulse width modulation signal with the first duty cycle and increases the pulse width modulation signal with the second duty cycle until the first duty cycle of the cleaning motion reaches the fourth preset threshold.

19. The method according to claim 16, wherein the control assembly determines the output quantity, the first duty cycle and/or the second duty cycle according to the user operations, the sensed data and/or the historical usage data.

20. The method according to claim 15, wherein a frequency of the actuation assembly is more than 100Hz.

21. The method according to claim 20, wherein the frequency of the actuation assembly ranges from 100Hz to 300Hz.

22. The method according to claim 20, wherein the frequency of the actuation assembly is substantially constant.

23. An electronic device, comprising: one or more processors and a memory for storing one or more programs, wherein the one or more programs, when executed by the one or more processors, cause the one or more processors to implement the oral nursing device control method according to any one of claims 15 to 22.

24. A non-volatile storage medium storing a plurality of instructions adapted to be loaded by a processor and to perform the oral nursing device control method according to any one of claims 15 to 22.
